Europäisches Patentamt

European Patent Office

Office européen des brevets

(19)

(11) Veröffentlichungsnummer: **0 150 388**
**B1**

(12) **EUROPÄISCHE PATENTSCHRIFT**

(45) Veröffentlichungstag der Patentschrift:
09.03.88

(51) Int. Cl.⁴: **C 08 L 71/04,** C 08 L 25/08,
C 08 L 51/04

(21) Anmeldenummer: 84115272.1

(22) Anmeldetag: 12.12.84

(54) **Thermoplastische Formmassen.**

(30) Priorität: 22.12.83 DE 3346304

(43) Veröffentlichungstag der Anmeldung:
07.08.85 Patentblatt 85/32

(45) Bekanntmachung des Hinweises auf die Patenterteilung:
09.03.88 Patentblatt 88/10

(84) Benannte Vertragsstaaten:
BE DE FR GB IT NL SE

(56) Entgegenhaltungen:
DE - A - 2 751 328

(73) Patentinhaber: BASF Aktiengesellschaft,
Carl-Bosch-Strasse 38, D-6700 Ludwigshafen (DE)

(72) Erfinder: Hambrecht, Jürgen, Dr.-Chem.,
Werderstrasse 30, D-6900 Heidelberg (DE)
Erfinder: Illers, Karl Heinz, Dr.-Phys., Huttenstrasse 20,
D-6701 Otterstadt (DE)
Erfinder: Echte, Adolf, Dr.-Chem., Leuschnerstrasse 42,
D-6700 Ludwigshafen (DE)
Erfinder: Swoboda, Johann, Dr.-Chem.,
Neuwiesenstrasse 28, D-6700 Ludwigshafen (DE)

## Beschreibung

Die Erfindung betrifft thermoplastische Formmassen auf der Grundlage von Polyphenylenether und Styrol-Acrylsäure-Copolymerisaten, die gegebenenfalls schlagfest modifiziert sein können.

Polymermischungen von Polyphenylenether mit Styrolpolymerisaten sind bekannt und Gegenstand einer Reihe von Patentschriften. Zum Stand der Technik nennen wir (1) US-A-3 383 435, (2) DE-A-2 713 430 und (3) US-A-4 360 618.

In (1) werden Zusammensetzungen von Polyphenylenether und Styrolharzen beschrieben. Die Styrolharze können sowohl mit Kautschuk, zumeist Polybutadien, modifiziert sein, es kann aber auch reines Polystyrol eingesetzt werden. Die Hitzebeständigkeit, Chemikalienbeständigkeit und die mechanischen Eigenschaften dieser Mischungen genügen häufig jedoch nicht den Anforderungen.

Ersetzt man die Styrolharze in (1) durch Styrol-Maleinsäureanhydrid-Copolymerisate (S–MSA), wie sie in (2) beschrieben werden, so kann die Wärmeformbeständigkeit und Chemikalienbeständigkeit der Abmischungen verbessert werden. Die mechanischen Eigenschaften der Mischungen sind jedoch auch bei Einsatz Kautschuk- modifizierter S–MSA-Copolymerisate unbefriedigend.

In (3) werden Polymerisatmischungen aus Polyphenylenether und Styrol-Acrylnitril- Copolymerisaten beschrieben, die eine hohe Steifigkeit und eine verbesserte Chemikalienbeständigkeit haben. Die Zähigkeit und die Wärmeformbeständigkeit sind noch nicht voll befriedigend.

Der Erfindung liegt die Aufgabe zugrunde, thermoplastische Formmassen auf der Basis von Polymermischungen aus Polyphenylenethern und Styrolpolymerisaten zu schaffen, die eine entsprechend hohe Wärmeformbeständigkeit und gute Chemikalienbeständigkeit und ausgewogene mechanische Eigenschaften haben.

Die Aufgabe der Erfindung wird gelöst durch Formmassen, die ein Gemisch aus

I 95 bis 5 Gew.-% eines Polyphenylenethers und

II 5 bis 95 Gew.-% eines Copolymerisates aus

$A_1$) 78 bis 99 Gewichtsteilen einer monovinylaromatischen Verbindung

$A_2$) 1 bis 12 Gewichtsteilen (Meth)acrylsäure und im Gemisch mit

B) 0 bis 20 Gewichtsteile eines Pfropfpolymerisats mit einer Glastemperatur $\leqslant$ 0 °C enthalten, wobei sich die Gewichtsteile auf 100 Gewichtsteile summieren und das Pfropfpolymerisat aufgebaut ist aus 10 bis 50 Gew.-Teilen, eines Gemisches aus mindestens einem vinylaromatischen Monomeren, das bis zu 12 Kohlenstoffatome enthält, und 0,1 bis 25 Gew.-Teilen, mindestens eines (Meth)acrylsäureesters und/oder Acrylnitril und/oder (Meth)acrylsäure und/oder Maleinsäureanhydrid als Pfropfhülle, auf 50 bis 90 Gew.-Teile einer elastomeren Pfropfgrundlage.

Nachstehend werden die Komponenten der erfindungsgemässen Formmasse, deren Herstellung und die Herstellung der Formmasse beschrieben.

### Komponente I

Die Komponente I der erfindungsgemässen Formmasse stellt mindestens ein aus einem Polyphenylenether (PPE) aufgebautes Harz dar, das in Mengen von 95 bis 5 Gew.-%, vorzugsweise 70 bis 30 Gew.-%, jeweils bezogen auf I + II, vorhanden ist.

Bei den Polyethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyether können in ortho-Stellung zum Sauerstoff, Wasserstoff, Halogen, Kohlenwasserstoffreste, die kein α-ständiges tert. Wasserstoffatom besitzen, Halogenkohlenwasserstoffe, Phenylreste und Kohlenwasserstoffoxi-Reste tragen. So kommen in Frage: Poly(2,6-dichlor-1,4-phenylen)-ether, Poly(2,6-diphenyl-1,4-phenylen)- ether, Poly(2,6-dimethoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)ether eingesetzt. Besonders bevorzugt werden Poly-(2,6-dimethyl-1,4-phenylen)-ether mit einer Grenzviskosität zwischen 0,45 und 0,65 dl/g (gemessen in Chloroform bei 30 °C).

Die Polyphenylenether können in bekannter Weise z.B. in Gegenwart von komplexbildenden Mitteln wie Kupferbromid und sek. Dibutylamin, aus den Phenolen hergestellt werden.

### Komponente II

Die Komponente II der erfindungsgemässen Formmassen ist mindestens ein Styrol-(Meth)-Acrylsäure-Copolymerisat, dass gegebenenfalls schlagzäh ausgerüstet sein kann. Die Komponente II ist aufgebaut aus den Monomeren $A_1$ und $A_2$ und falls es schlagzähig ausgerüstet ist, mit der Elastomerkomponente B.

Die Komponente II ist in einem Anteil von 5 bis 95 Gew.-%, vorzugsweise von 30 bis 70 Gew.-%, jeweils bezogen auf die Mengen an Komponente I und II in den erfindungsgemässen Formmassen enthalten.

Als monovinylaromatische Monomeren $A_1$ kommen Styrol, α-Methylstyrol oder kernalkylierte Styrole mit bis zu 12 Kohlenstoffatome in Frage. Besonders bevorzugt sind Styrol, α-Methylstyrol und p-Methylstyrol.

Als Monomere $A_2$ werden Acrylsäure und/oder Methacrylsäure verwendet. Die Monomeren $A_1$ und $A_2$ sind in der Komponente II im Verhältnis von 78 bis 99 Gew.- Teilen $A_1$ und 1 bis 12 Gew.-Teilen $A_2$, vorzugsweise 91 bis 99 Gew.-Teile $A_1$ und 1 bis 9 Gew.-Teile $A_2$, enthalten. Die Gewichtsteile ergänzen sich auf 100 Gew.-Teile falls keine Komponente B enthalten ist.

Vorzugsweise werden Copolymerisate verwendet, die aus der Gruppe der Styrol-Acrylsäure-Copolymerisate und der Butadien-Styrol-Acrylsäure bzw. Butylacrylat-Styrol-Acrylsäure-Copolymerisate ausgewählt sind.

Der Bestandteil A der Komponente I wird durch kontinuierliche Mischpolymerisation der Monomeren $A_1)$, $A_2)$ bei hohen Temperaturen unter starkem Rühren hergestellt. Die Monomeren $A_1)$ und $A_2)$ werden kontinuierlich in ein Polymerisationsgefäss eingebracht und gleichzeitig wird eine diesen Mengen entsprechende Menge des Polymerisationsgemisches aus dem Gefäss abgezogen (vgl. A.W. Hanson, R.L. Zimmermann, Industrial Eng. Chemistry 49, (1957) Seite 803). Der Bestandteil A kann jedoch auch nach allen anderen bekannten Polymerisationsverfahren hergestellt werden.

Bestandteil B

Der Bestandteil B stellt eine Elastomerkomponente dar, die in den erfindungsgemässen Formmassen gegebenenfalls enthalten ist. Der Bestandteil B ist ein Pfropfpolymerisat, das in einem Anteil von 0 bis 20 Gew.-Teile, insbesondere von 1 bis 18 Gew.-Teile verwendet wird. Die Gewichtsteile B summieren sich zusammen mit dem Komponenten $A_1$ und $A_2$ zu 100.

Dieses Pfropfmischpolymerisat ist aufgebaut aus 10 bis 50 Gew.-Teilen, vorzugsweise 15 bis 45 Gew.-Teilen eines Gemisches aus mindestens einem vinylaromatischen Monomeren, das bis zu 12 Kohlenstoffatome enthält, und 0,1 bis 25 Gew.-Teilen, vorzugsweise 5 bis 20 Gew.-Teilen mindestens eines (Meth)acrylsäureesters und/oder von Acrylnitril und/oder von (Meth)acrylsäure und/oder Maleinsäureanhydrid als Pfropfhülle, auf 50 bis 90 Gew.-Teile, insbesondere 60 bis 80 Gew.-Teile einer elastomeren Pfropfgrundlage (Kautschukkomponente).

Das Pfropfpolymerisat soll eine Glastemperatur (nach K.H. Illers und H. Breuer, Kolloid-Zeitschrift 176, (1961) Seite 110) haben, die $\leq 0\,°C$ beträgt. Als Kautschuk kommen beispielsweise in Frage: Polybutadien (vgl. DE-A-1 420 775 und DE-A-1 495 089), Copolymerisate aus Butadien und Styrol (GB-A-649 166), Copolymerisate aus Butadien und Styrol, Polyacrylsäureester, die gegebenenfalls vernetzt sein können (vgl. DE-B-1 138 921, DE-B-1 224 486 oder DE-B-1 260 135) sowie Copolymerisate aus Acrylsäureester und Butadien (vgl. DE-B-1 238 207), ferner Elastomere von Copolymerisaten aus Acrylsäureestern mit Styrol, Acrylnitril und Vinylethern und Copolymerisate aus Ethylen und einem nicht konjugierten Dien (EPDM-Kautschuke) sowie hydrierte Styrol-Butadien-Kautschukpolymerisate.

Die vinylaromatischen Pfropfmonomeren sind Styrol, α-Methylstyrol und/oder kernalkylierte Styrole mit bis zu 12 C-Atomen; als polare Monomere kommen (Meth)acrylsäureester von Alkanolen mit bis zu 8 C-Atomen, sowie Acrylnitril, (Meth)acrylsäure oder Maleinsäureanhydrid oder Mischungen in Betracht.

Die Herstellung der Elastomercomponente B ist an sich bekannt. Sie können z.B. hergestellt werden durch Polymerisation eines Gemisches von Styrol und Acrylsäure oder (Meth)acrylaten in Gegenwart eines Kautschuks. Die Pfropfcopolymerisation kann dabei bekannterweise in Lösung, Suspension oder vorzugsweise in Emulsion erfolgen. Wesentlich für das Eintreten des Erfolges ist nunmehr, dass die Bestandteile A und B der Komponente II der erfindungsgemässen Formmasse derart aufgebaut und in der Mischung so aufeinander abgestimmt sind, dass der Absolutbetrag der polaren Monomeren in den Bestandteilen A) und B) um weniger als 9 differiert.

Die Komponente II der erfindungsgemässen Formmassen wird vorzugsweise durch Abmischen einer Schmelze der Bestandteile A und B erhalten. Dabei werden die Bestandteile A und B als Schmelzen bei Temperaturen zwischen 200 und 260 °C auf Extrudern, Walzen oder Knetern bei Verweilzeiten von einigen Minuten gemischt. Man kann aber auch Lösungen des Bestandteils A und des Pfropfmischpolymerisates vermischen und die Lösungsmittel anschliessend entgasen.

Zusätzlich zu den Komponenten I und II kann die erfindungsgemässe Formmasse gegebenenfalls übliche Zusatzstoffe in wirksamen Mengen enthalten. Als solche Zusatzstoffe seien genannt: Pigmente, Farbstoffe, Füllstoffe, Flammschutzmittel wie z.B. Triarylphosphate, weitere verträgliche Polymere, Antistatika, Antioxidantien und Schmiermittel.

Herstellung der erfindungsgemässen Formmassen aus den Komponenten I und II

Die Herstellung der erfindungsgemässen Formmasse kann aus den Komponenten I und II, wie nachstehend beschrieben, erfolgen. Bevorzugt wird jedoch die Herstellung aus den Bestandteilen A, B und Komponente I und gegebenenfalls anderen Zusatzstoffen, nämlich durch Mischen der Weich- und Hartkomponente (der Komponente II) und der Polyphenylenether. Üblicherweise erfolgt die Herstellung auf Vorrichtungen, die ein homogenes Mischen zulassen, wie Knetern, Extrudern oder Walzenmischgeräten.

Die Herstellung der erfindungsgemässen Formmasse kann aber auch durch intensives Durchmischen von Lösungen der einzelnen Komponenten und anschliessendes Eindampfen des Lösungsgemisches hergestellt werden. Auch kombinierte Lösungs- und Schmelzemischprozesse z.B. auf Entgasungsextrudern sind erfolgreich erprobt worden.

Für die Herstellung der erfindungsgemässen Formmassen wurden die in Tabelle 1 aufgeführten Copolymerisate Nr. 1 bis Nr. 3 und gegebenenfalls die in der Tabelle 2 genannten Pfropfkautschuke $B_1$ bis $B_3$ verwendet. Zusammensetzung und weitere Eigenschaften sind in den genannten Tabellen angegeben.

Als Komponente I wurde ein Handelsprodukt auf Basis eines Poly-(2,6-dimethyl-1,4-phenylen)ethers verwendet, das eine Grenzviskosität von 0,5 [dl/g] und eine Kerbschlagzähigkeit von 4 $(kJ/m^2)$ aufwies.

Tabelle 1
SAS-Copolymeristae (Bestandteil $A_1$ und $A_2$)

| Bezeich-nung | Zusammenset-zung in Gew.-Teile | | Kerbschlag-zähigkeit $(kJ/m^2)$ | Vicat-tempe-ratur $(°C)$ |
|---|---|---|---|---|
| | S | AS | | |
| Nr. 1 | 95 | 5 | 3 | 101 |
| Nr. 2 | 92 | 8 | 3 | 101 |
| Nr. 3 | 85 | 15 | 3 | 103 |

S=Styrol, AS=Acrylsäure

Die Copolymerisate Nr. 1 bis Nr. 3 hatten alle eine Viskositätszahl von 70 (ml/g), gemessen 0,5%ig in DMF bei 25 °C.

Tabelle 2
Pfropfmischpolymerisate (Bestandteil B)

| Bezeichnung | Zusammensetzung des Kautschuks(%) | | Zusammensetzung Pfropfhülle (%) | | | Tg $(°C)$ |
|---|---|---|---|---|---|---|
| | Bu | BA | S | AS | AN | |
| B 1 | 100 | – | 90 | 10 | – | – 81 |
| B 2 | – | 100 | 90 | 10 | – | – 46 |
| B 3 | 50 | 50 | 85 | 10 | 5 | – 67 |

Bu=Butadien, BA=Butylacrylat, S=Styrol, AS=Acrylsäure, AN=Acrylnitril
Als Komponente III wird Triphenylphosphat eingesetzt.

Die in den Versuchen und Vergleichsversuchen genannten Parameter wurden wie folgt bestimmt:

1. Die Schlagzähigkeit und Kerbschlagzähigkeit in $(kJ/m^2)$ wurde nach DIN 53 453 an spritzgegossenen Normkleinstäben bei einer Massetemperatur von 250 °C gemessen.

2. Der Elastizitätsmodul in $(N/mm^2)$ wurde nach DIN 53 457 an spritzgegossenen Schulterstäben ermittelt.

3. a) Die Viskositätszahlen, VZ, in (ml/g) wurden an einer 0,5%igen Lösung in Dimethylformamid bestimmt.

b) Grenzviskosität ($\eta$) in (dl/g) wurde in $CHCl_3$ bei 30 °C gemessen.

4. Der Vicat-Erweichungspunkt in °C wurde nach DIN 53 460, Verfahren B, in Silikonöl bestimmt.

5. Die Tg-Werte der Kautschuke wurden nach K.H. Illers und H. Breuer, Kolloid-Zeitschrift, loc. cit. bestimmt.

6. Die Chemikalienbeständigkeit wurde in einem Schnelltest an Spritzkästchen, die mit Isopropanol gefüllt und 48 h gelagert wurden, überprüft und visuell beurteilt

Note 1 = keine Veränderungen
Note 2 = Oberflächenaufrauhungen, Trübungen
Note 3 = Verformungen.

Tabelle 3

| Beisp. | Zusammensetzung (Gew.-%) Komponenten | | | Kerb-schlag-zähigkeit $(kJ(m^2)$ | Vicat-Temp. $(°C)$ | E-Modul $(N/mm^2)$ | Chemikalien-beständigkeit Note |
|---|---|---|---|---|---|---|---|
| | I | II | III | | | | |
| 1 | 70 | 30 (100 Tle Nr. 1) | – | 6 | 159 | 3100 | 1 |
| 2 | 70 | 30 (100 Tle Nr. 2) | – | 6 | 160 | 3000 | 1 |
| 3 | 50 | 50 (100 Tle Nr. 3) | – | 5 | 142 | 2900 | 1 |
| 4 | 60 | 40 ( 75 Tle Nr. 1 25 Tle $b_1$) | – | 13 | 150 | 2700 | 1 |
| 5 | 60 | 40 ( 75 Tle Nr.2 25 Tle $B_2$) | – | 12 | 150 | 2800 | 1 |

Tabelle 3 (Fortsetzung)

| Beisp. | Zusammensetzung (Gew.-%) Komponenten | | | Kerb-schlag-zähigkeit (kJ(m²)) | Vicat-Temp. (°C) | E-Modul (N/mm²) | Chemikalien-beständigkeit Note |
|---|---|---|---|---|---|---|---|
| | I | II | III | | | | |
| 6 | 60 | 40 ( 75 Tle Nr. 2 25 Tle B$_3$) | – | 13 | 149 | 2800 | 1 |
| 7 | 50 | 40 ( 75 Tle Nr. 2 25 Tle.B$_3$) | 10 | 15 | 127 | 2500 | 1 |
| Vergl.-Versuch (nicht erfindungsgemäss) | | | | | | | |
| I | 70 | 30 (100 Tle Nr. 3) | | 3 | 138 | 3000 | 2 |
| II | 60 | 40 ( 75 Tle Nr. 3 25 Tle B$_2$) | | 6 | 125 | 2800 | 3 |

## Patentansprüche

1. Thermoplastische Formmassen, die ein Gemisch aus

I 95 bis 5 Gew.-% eines Polyphenylenethers und

II 5 bis 95 Gew.-% eines Copolymerisates enthalten, das besteht aus

A$_1$ 78 bis 99 Gew.-Teilen einer monovinylaromatischen Verbindung,

A$_2$ 1 bis 12 Gew.-Teilen (Meth)acrylsäure und im Gemisch mit

B 0 bis 20 Gew.-Teilen eines Pfropfpolymerisates mit einer Glastemperatur ≤ 0 °C, wobei die Gewichtsteile sich auf 100 Gewichtsteile summieren und das Pfropfpolymerisat aufgebaut ist aus 10 bis 50 Gew.-Teilen, eines Gemisches aus mindestens einem vinylaromatischen Monomeren, das bis zu 12 Kohlenstoffatome enthält, und 0,1 bis 25 Gew.-Teilen, mindestens eines (Meth)acrylsäureesters und/oder Acrylnitril und/ oder (Meth)acrylsäure und/oder Maleinsäureanhydrid als Pfropfhülle, auf 50 bis 90 Gew.-Teile einer elastomeren Pfropfgrundlage.

2. Thermoplastische Formmassen nach Anspruch 1, dadurch gekennzeichnet, dass als Polyphenylenether I Poly(2,6-dimethyl-1,4-phenylen)ether eingesetzt wird.

3. Thermoplastische Formmassen nach Anspruch 1, dadurch gekennzeichnet, dass als Copolymerisat II ein Copolymerisat verwendet wird, das ausgewählt ist aus der Gruppe der Styrol-Acrylsäure-Copolymerisate und der Butadien-Styrol-Acrylsäure bzw. Butylacrylat-Styrol-Acrylsäure-Copolymerisate.

4. Thermoplastische Formmassen nach Anspruch 1 bis 3, dadurch gekennzeichnet, dass die Komponenten I und II im Verhältnis 30 : 70% bis 70 : 30% eingesetzt werden.

5. Thermoplastische Formmassen gemäss Anspruch 1 bis 4, dadurch gekennzeichnet, dass sie Triarylphosphat enthalten.

6. Verwendung der Formmassen gemäss Anspruch 1 bis 5 zur Herstellung von Formteilen.

## Revendications

1. Matières à mouler thermoplastiques, contenant un mélange de

I 95 à 5% en poids d'un poly(éther de phénylène) et

II 5 à 95% en poids d'un copolymère, formé de

A$_1$ 78 à 99 parties en poids d'un composé monovinyl-aromatique,

A$_2$ 1 à 12 parties en poids d'acide (méth)acrylique, en mélange avec

B 0 à 20 parties en poids d'un polymère de greffage d'une température de transition vitreuse égale ou inférieure à 0 °C – la somme des parties en poids étant égale à 100 –,

le polymère de greffage étant constitué de 50 à 90 parties en poids d'une matrice de greffage élastomère, sur laquelle sont greffées 10 à 50 parties en poids d'un mélange d'au moins un monomère vinyl-aromatique avec jusqu'à 12 atomes de carbone et de 0,1 à 25 parties en poids d'au moins un ester (méth)acrylique et(ou) d'acrylonitrile et(ou) d'acide (méth)acrylique et(ou) d'anhydride maléique comme enveloppe greffée.

2. Matières à mouler thermoplastiques suivant la revendication 1, caractérisées en ce que le poly-(éther de phénylène) I employé est le poly(éther de diméthyl-2,6 phénylène-1,4).

3. Matières à mouler thermoplastiques suivant le revendication 1, caractérisées en ce que le copolymère II est choisi parmi les copolymères du styrène et de l'acide acrylique, les copolymères du butadiène, du styrène et de l'acide acrylique et les copolymères de l'acrylate de butyle, du styrène et de l'acide acrylique.

4. Matières à mouler thermoplastiques suivant l'une des revendications 1 à 3, caractérisées en ce que les composants I et II sont mis en œuvre dans un rapport (en %) compris entre 30 : 70 et 70 : 30.

5. Matières à mouler thermoplastiques suivant l'une des revendications 1 à 4, caractérisées en ce qu'elles contiennent du triaryl-phosphate.

6. Utilisation des matières à mouler suivant les revendications 1 à 5 pour la fabrication d'articles faconnés.

## Claims

1. A thermoplastic molding material which contains a mixture of

I from 95 to 5% by weight of a polyphenylene ether and

II from 5 to 95% by weight of a copolymer consisting of

$A_1$ from 78 to 99 parts by weight of a monovinylaromatic compound and

$A_2$ from 1 to 12 parts by weight of (meth)acrylic acid, and mixes with

B from 0 to 20 parts by weight of an elastomer component which has a glass transition temperature of 0 °C, the sum of the number of parts by weight being 100 parts by weight,

and the graft polymer is composed of from 10 to 50 parts by weight of a mixture of one or more vinylaromatic monomers, which contain up to 12 carbon atoms, and from 0.1 to 25 parts by weight of one or more (meth)acrylates and/or acrylonitrile and/or (meth)acrylic acid and/or maleic anhydride as the grafted shell, on from 50 to 90 parts by weight of an elastomeric grafting base.

2. A thermoplastic molding material as claimed in claim 1, wherein poly-(2,6-dimethyl-1,4-phenylene) ether is employed as the polyphenylene ether I.

3. A thermoplastic molding material as claimed in claim 1, wherein the copolymer used as copolymer II is selected from the group consisting of styrene/acrylic acid, butadiene/styrene/acrylic acid and butyl acrylate/styrene/acrylic acid copolymers.

4. A thermoplastic molding material as claimed in any of claims 1 to 3, wherein components I and II are empolyed in a ratio of from 30:70 to 70:30.

5. A thermoplastic molding material as claimed in any of claims 1 to 4, which contains a triaryl phosphate.

6. Use of a molding material as claimed in any of claims 1 to 5 for the production of moldings.